# EUROPEAN PATENT SPECIFICATION

(11) **EP 2 033 809 B1**
(45) Date of publication and mention of the grant of the patent: **13.06.2012**
(21) Application number: 07017616.9
(22) Date of filing: 07.09.2007
(51) Int. Cl.: B60B 21/02

(54) **Motorcycle wheel rim and method of making the same**
Motorradfelge und Verfahren zu ihrer Herstellung
Jante de roue de motocyclette et son procédé de fabrication

(43) Date of publication of application: 11.03.2009
(73) Proprietor: Kunshan Henry Metal Technology Co., Ltd., 215300 Kunshan Jiangsu (CN)
(72) Inventor: Fioravanti, Moreno, 40024 Castel San Pietro Terme, (BO) (IT)
(74) Representative: Chaillot, Geneviève

(56) References cited:
- EP-A- 0 240 241
- EP-A- 1 714 798
- WO-A-02/32695
- WO-A-2007/034426
- US-B1- 6 183 047

## Description

The invention relates to a motorcycle wheel rim, and a method of making such a motorcycle wheel rim.

Historically, motorcycle wheel rims have been made of metal. While steel is still used, rims can also be made from aluminum alloys or titanium. Several properties of a material help decide whether it is an appropriate material for the construction of a motorcycle wheel rim. The density or specific gravity of the material is a measure of how light or heavy the material volume is adding to the total weight of the wheel. Stiffness or elastic modulus affect the performance of the wheel. The yield strength determines how much force is needed to permanently deform the material, and this characteristic is important for crash-worthiness. The elongation characteristic determines how much deformity the material allows before cracking which is also important for crash-worthiness. The fatigue limit and endurance limit determines the durability of the rim when subjected to from rotation or street bumps. Such characteristic are to be optimized.

As concerns aluminum alloys, they have lower density and lower strength compared with steel alloys. Aluminum alloys can, however, be used to build a rim that is lighter than steel. Furthermore, aluminum alloy has no substantial fatigue endurance limit; even the smallest repeated stresses will eventually cause failure if repeated enough times. However, alloy technology, good mechanical design and good construction practices help to extend the fatigue life of motorcycle wheel rims out of aluminum alloy to acceptable lengths. Other attempts to improve the properties of aluminum alloy motorcycle wheel rims include the shaping of the cross section of the rims for optimizing stiffness.

The EP 1 326 753 shows a rim for mounting tubeless tires for bicycles where the rim is constituted by a profiled element which is curved in a circular fashion and is symmetrical with respect to a centerline plane, that profile element forming an annular seat for taking up the beads of a tubeless type tire. The rim comprises annular chambers below the seat the walls of which chambers are supposed to stabilize the rim structure. The two hollow annular chambers which are provided on opposite sides of the rim are connected to each other by an annular collecting wall which forms an annular hollow central chamber with the outer wall of the profile. This rim may be suitable for bicycles, but it is not stable enough for application with motor cycles, in particular heavy motor cycles where the forces exerted by the tire onto the rim are substantial.

According to WO 2007/034426 A, a spoked wheel comprises a rim, a hub and a plurality of spokes which connect the rim to the hub and are connected to the rim by means of nipples inserted in a corresponding plurality of drilled seats in the rim. The rim defines a concave outer cylindrical surface having a channel-like configuration with a bottom and a pair of flanks which extend from the opposing sides of the bottom of the rim. The rim includes a first rim part and a second rim part which are separate from one another, wherein the first rim part comprises a radially outer cylindrical portion forming the whole bottom of the rim and the second rim part comprises a radially inner cylindrical portion having the drilled seats. Preferably, the first and second rim parts are detachably joined together by threaded connection members.

As concerns the wheels for motor bicycles, it is important that the wheels are light weight because the wheels have to be accelerated each time the cyclist desires to speed up, and this takes up the more fuel the more heavy the wheels are. Therefore, in the case of motor bicycle wheels, the weight of the wheel is not only a concern as relates to moving a particular mass, but it is also a concern in view of the fuel usage and the CO2 exhaust gases associated with such acceleration of the motor bicycle. Therefore, reducing weight not only enables a better acceleration of the motor because of less weight, but also reduces the environmental influence by the motor bicycle. Since the rim of the bicycle wheel contributes a major portion of the weight of the total wheel, reducing the weight of the rim advantageously contributes to improve performance and reduce environmental problems associated with motor cycles. However, when reducing the weight of the rim, care has to be taken to achieve also the required stiffness and standing of the rim so that the rim can take up or withstand the heavy load or the strong forces exerted to the rim when a heavy motorcycle is running at high speed.

It is apparent from the above, that extensive research and development efforts have been made in order to provide a motorcycle wheel rim which is, on the one hand, light weight and, on the other hand, has the desired mechanical stiffness properties mentioned above.

For achieving the above object, the motorcycle wheel rim of the invention comprises the features of claim 1.

Preferred embodiments of the invention are characterized in the sub claims.

This arrangement of the support of the seats for the beads of the tire provides the required stiffness and stability of the rim even if the large forces which are exerted by heavy motor cycles at high speed, are applied to the seats. Such forces have to be taken up by the seats and transmitted via the supporting structure to the center area of the outer profile wall where the spokes of the wheel or any connecting structure between the rim and the hub of the wheel are located. The forces exerted on the seats are taken up by the outer profile wall at the outer ends of the seats and by the supporting walls at the inner ends of the seats, and the supporting walls meet the outer profile wall at locations closer to the center of the outer profile wall, where the spokes are attached, than the inner ends of the seats. Therefore, the distribution of the load from the seats to the center of the outer profile wall is optimized. This in turn enables the thickness of the metal walls of the rim profile to be reduced which reduces the weight of the rim as a hole to a considerable extend as compared to a rim with a full metal profile and without any hollow annular chambers. On the other hand, when having hollow annular chambers in order to reduce the weight, it is important to have a stable support structure for the seats to guarantee the required stiffness and stability of the rim upon high load or stress conditions.

The motor bicyle rim of the invention provides for a three-point-support of the seats, i.e. the support by the outer profile wall at the outer end of each seat, the support by the supporting wall, and the central portion of the seat by the further supporting wall which combines with the first mentioned supporting wall to form additional support for the seat. This also has been proven advantageous in connection with taking up the forces to be expected.

According to a preferred embodiment of the invention a motorcycle wheel rim is provided wherein the outer profile wall has the general shape of a wide open "V", and wherein the connecting wall is displaced from the plane of the seats towards a center bottom portion of the outer profile wall. This also reduces the weight of the rim because the connecting wall is not as long as it would be if the connecting wall would connect the seats on the level of the seats themselves.

According to a preferred embodiment of the invention a motorcycle wheel rim is provided wherein the outer profile wall has the general shape of an ark, and wherein the hollow central chamber between the outer profile wall and the connecting wall extends along the hollow chambers below the seats and up to a location below the seats. By means of this arrangement, the supporting wall between the outer profile wall and the seat is moved slightly outwards and under the seat which is also advantageous for taking up the high forces to be expected.

According to a preferred embodiment of the invention a motorcycle wheel rim is provided wherein the connecting wall and the outer profile wall have centered holes for fitting a spoke nipple in the outer profile wall and a sealing element in the hole of the connection wall to provide a rime for tubeless tires. By means of this arrangement, the rim is not only adapted for tires supported by a tire tube but also for tubeless tires which are getting evermore popular at the moment. Therefore, the structure of the rim which was designed in view of stiffness and stability, also lets itself to the application for tubeless tires which is an advantageous feature of the rim of the invention.

Embodiments of the invention are now described with reference to the drawings in which:
Fig. 1 shows a sectional view of a motorcycle wheel rim of a first embodiment of the invention;
Fig. 2 shows a sectional view of a motorcycle wheel rim of a second embodiment of the invention;
Fig. 3 shows a sectional view of a motorcycle wheel rim of a third embodiment of the invention; and
Fig. 4 shows a sectional view of a motorcycle wheel rim of a forth embodiment of the invention having a carbon matrix reinforcement layer.

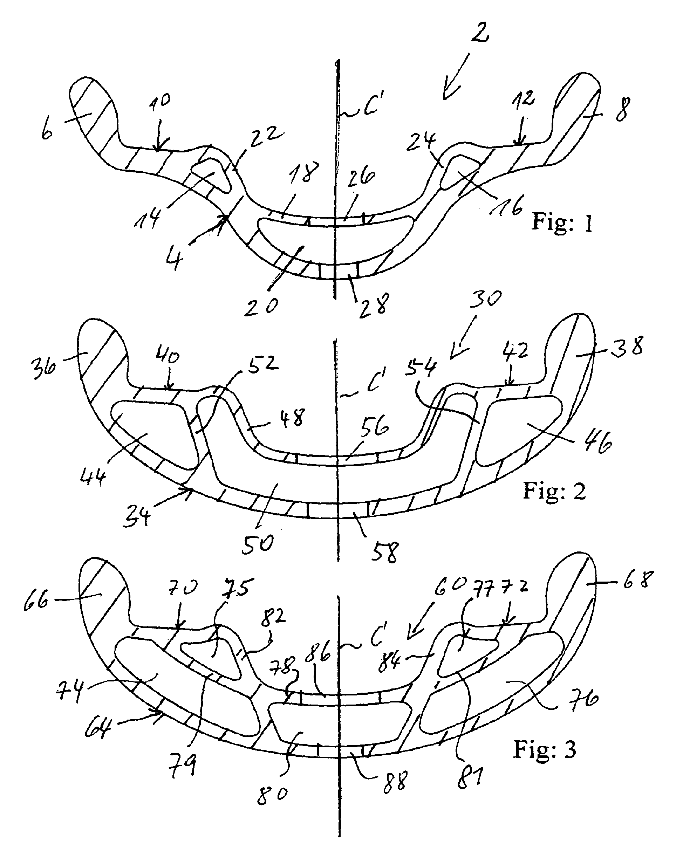

Fig. 1 shows a sectional view of a motorcycle wheel rim. The motorcycle wheel rim of Fig. 1 comprises a profiled element which forms the circular rim 2, is symmetrical with respect to a centerline C of the wheel and has an outer profile wall 4 having the general shape of a wide open "V" and ending in two wheel flanges 6, 8. The rim 2 comprises a pair of seats 10, 12 for beads of a tire (not shown) to be mounted on the rim inside of the rim flanges 6, 8. Two hollow annular chambers 14, 16 are provided next to and below the seats 10, 12. The chamber walls are connected to each other by an annual connecting wall 18 which forms an annular hollow central chamber 20 with the outer profile wall 4.

The seats 10, 12 are supported at their outer ends by the outer profile wall 4 and at their inner ends by a supporting wall 22 and 24 respectively, which supporting walls 22, 24 extend from the respective inner end of the associated seat 10, 11 to the outer profile wall 4 of the rim 2 in an oblige direction such that the junction of the supporting wall 22 or 24 with the outer profile wall 4 is closer to the centerline C of the rim 2 than the junction of the supporting wall 22 or 24 respectively with the seat. The rim of Fig. 1 has a centered hole 26 in the connecting wall and a centered hole 28 in the outer profile wall 4. The centered hole 28 in the outer profile wall 4 serves to take up all fit a spoke nipple (not shown) in the outer profile wall 4, and the centered hole 26 serves to take up a sealing element (not shown) which is provided for sealing of the centered hollow chamber 20 against the inner space of the tire (not shown) above the connecting wall 18.

Fig. 2 shows a sectional view of a motor cycle rim 30. The motorcycle wheel rim of Fig. 2 comprises a profiled element 34 which forms the circular rim 30, is symmetrical with respect to a centerline C of the wheel and has an outer profile wall 34 having the general shape of an ark and ending in two wheel flanges 36, 38. The rim 30 comprises a pair of seats 40, 42 for beads of a tire (not shown) to be mounted on the rim inside of the rim flanges 36, 38. Two hollow annular chambers 44, 46 are provided next to and below the seats 40, 42. The chamber walls are connected to each other by an annual connecting wall 48 which forms an annular hollow central chamber 50 with the outer profile wall 34. The hollow central chamber 50 between the outer profile wall 34 and the connecting wall 48 extends along the hollow chambers 44,46 below the seats 40,42 and up to a location below the seats 40,42.

The seats 40, 42 are supported at their outer ends by the outer profile wall 4 and at their inner ends by a supporting wall 52 and 54 respectively, which supporting walls 52, 54 extend from the respective inner end of the associated seat 40, 41 to the outer profile wall 34 of the rim 30 in an oblige direction such that the junction of the supporting wall 52 or 54 with the outer profile wall 34 is closer to the centerline C of the rim 30 than the junction of the supporting wall 52 or 54 respectively with the seat. The rim of Fig. 2 has a centered hole 56 in the connecting wall and a centered hole 58 in the outer profile wall 34, the holes serving the purpose mentioned above with respect to the first embodiment.

Fig. 3 shows a sectional view of a motor cycle rim 60 of a third embodiment of the invention. The motorcycle wheel rim of Fig. 3 comprises a profiled element which forms a circular rim 60, is symmetrical with respect to a centerline C of the wheel and has an outer profile wall 64 having the general shape of an ark and ending in two wheel flanges 66, 68. The rim 60 comprises a pair of seats 70, 72 for beads of a tire (not shown) to be mounted on the rim inside of the rim flanges 66, 68. Two hollow annular chambers 74, 75 are provided next to and below the seat 70, and two hollow annular chambers 76, 77 are provided next to and below the seat 72. The chamber walls are connected to each other by an annual connecting wall 78 which forms an annular hollow central chamber 80 with the outer profile wall 64. The hollow chambers 74,75;76,77 below the seats 70,72 are divided by further supporting walls 79, 81 extending in general in parallel to the outer profile wall 64. The further supporting walls 79,81 extend from about the midpoint of the first mentioned supporting walls 82,84 to about the midpoint of the seats 70,72.

The seats 70, 72 are supported at their outer ends by the outer profile wall 64 and at their inner ends by a supporting wall 82 and 84 respectively, which supporting walls 82, 84 extend from the respective inner end of the associated seat 70, 71 to the outer profile wall 64 of the rim 60 in an oblige direction such that the junction of the supporting wall 82 or 84 with the outer profile wall 4 is closer to the centerline C of the rim 60 than the junction of the supporting wall 82 or 84 respectively with the seat. In addition, the seats 70, 72 are supported by the further supporting walls 79,81. The rim of Fig. 3 has a centered hole 86 in the connecting wall and a centered hole 88 in the outer profile wall 64, the holes serving the purpose mentioned above with respect to the first embodiment.

By means of the above arrangement, the load transmission from spokes of the wheel fixed at the center of the outer profile wall to the respective seats for the beads of the tire (not shown) is affected by the outer profile wall leading to an outer end of the respective seats and the supporting walls leading to the inner ends of the respective seats providing the sufficient stiffness and stability to the rim and a sufficiently stable support of the seats during a speed operation of the motor cycle.

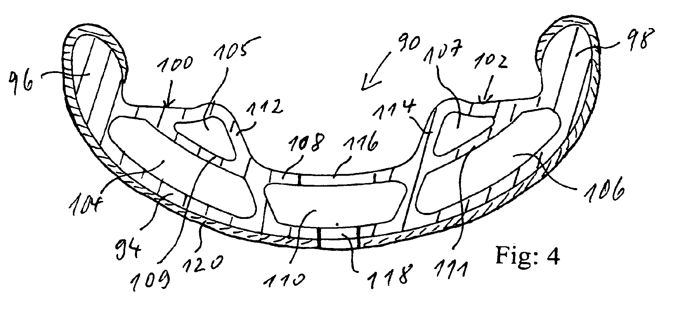

Fig. 4 shows a sectional view of a motor cycle rim 90 of a forth embodiment of the invention. The motorcycle wheel rim of Fig. 4 comprises a profiled element which forms a circular rim 90, is symmetrical with respect to a centerline C of the wheel and has an outer profile wall 44 having the general shape of an ark and ending in two wheel flanges 96, 98. The rim 90 comprises a pair of seats 100, 102 for beads of a tire (not shown) to be mounted on the rim inside of the rim flanges 96, 98. Two hollow annular chambers 104, 105 are provided next to and below the seat 100, and two hollow annular chambers 106, 107 are provided next to and below the seat 102. The chamber walls are connected to each other by an annual connecting wall 108 which forms an annular hollow central chamber 110 with the outer profile wall 94. The hollow chambers 104,105;106,107 below the seats 100,102 are divided by further supporting walls 109, 111 extending in general in parallel to the outer profile wall 94. The further supporting walls 109, 111 extend from about the midpoint of the first mentioned supporting walls 112,114 to about the midpoint of the seats 100,102.

The seats 100, 102 are supported at their outer ends by the outer profile wall 94 and at their inner ends by a supporting wall 112 and 114 respectively, which supporting walls 112, 114 extend from the respective inner end of the associated seat 100, 102 to the outer profile wall 94 of the rim 90 in an oblige direction such that the junction of the supporting wall 112 or 114 with the outer profile wall 94 is closer to the centerline C of the rim 90 than the junction of the supporting wall 112 or 114 respectively with the seat. In addition, the seats are supported by the further supporting walls 109,111. The rim of Fig. 4 has a centered hole 116 in the connecting wall 108 and a centered hole 118 in the outer profile wall 94, the holes serving the purpose mentioned above with respect to the first embodiment.

The motorcycle wheel rim 90 of Fig. 4 consists of an aluminum profile which is coated by a fiber or carbon fiber reinforced resin layer 120, in the following carbon layer 120 which covers a radially inner surface, the side surfaces and the inner sides of the rim flanges 96,98. As can be seen from Fig. 4, the seats 100, 102 and the connecting wall 108 are not covered by a carbon layer at the side of the rim adjacent the tire (not shown). This has the effect that the beads of the tire are sitting directly on aluminum which provides a better performance as to air-tightness of the wheel when the tire is mounted. Furthermore, the nipples (not shown) for the wire spokes can sit on an aluminum surface which is also preferred over a seat on a non-metal material which means that the holes 118 for the nipples may also be sealed of more tightly.

It should be understood that the invention is not restricted to the shape of the rim as shown in the figures, but that the invention may also be applied to so called chamber rims which contain air chambers in a circumferential direction within the metal part of the rim in order to further reduce the weight of the rim.

It is preferred that the aluminum alloys 6061 or 7005 according to DIN EN 573.3 are used. Furthermore, glass fibers comprising weights of 200 to 800 tex, carbon fibers in the range of 3K, 6K, 9K and 12K, and the epoxy resin having a curing temperature of 125°C to 180°C, preferably 150°C, are preferably used. It is most preferred that the glass fiber reinforcement or carbon fiber enforcement layer is in the form of a woven fabric out of the fibers mentioned.

In order to produce the motorcycle wheel rim according to the invention, glass fiber or carbon fiber reinforcement material is fixed to the basic rim structure out of aluminum alloy. To this end, an adhesive material designed to bond fibrous material to the basic rim structure of aluminum alloy is used. After fixing the glass fiber or carbon fiber reinforcement material to the basic rim structure, a prepreg resin is provided to the thus prepared semi product basic rim structure having glass fiber or carbon fiber reinforcement material fixed thereto, and, thereafter, the prepreg resin together with the glass fiber or carbon fiber reinforcement is cured.

In order to produce the motorcycle wheel rim of the invention by an alternative method, glass fiber or carbon fiber reinforced prepreg material is fixed to the basic rim structure out of aluminum alloy. To this end, an adhesive material designed to bond the prepreg material to the basic rim structure of aluminum alloy is used. After fixing the prepreg material to the basic rim structure, the thus prepared semi product basic rim structure having prepreg material fixed thereto is cured.

In both methods the curing is carried out in a moulding tool or in an autoclave, wherein the curing is carried out at 125°C to 180°C, preferably 150°C, for 30 min. After curing and removal from the moulding tool or the autoclave, the motorcycle wheel rim is trimmed and polished.

## Claims

1. Motorcycle wheel rim (60) comprising:
a profiled element which forms a circular rim, is symmetrical with respect to a centerline (C) plane of the wheel, has an outer profile wall (64) having the general shape of an ark and ending in two rim flanges (66,68) and comprises, inside of the rim flanges (66,68) a pair of seats (70,72) for beads of a tire to be mounted on the rim (60), wherein
at least two hollow annular chambers (74,75,76,77) are provided next to and below the seats (70,72) and are connected to each other by an annular connecting wall (78) which forms an annular hollow central chamber (80) with the outer profile wall (64),
the seats (70,72) are supported, at their outer ends, by the outer profile wall (64) and, at their inner ends, by a first supporting wall (82,84) extending from the respective inner end of the associated seat (70,72) to the outer profile wall (64) of the rim
whereby the load transmission from spokes of the wheel seated in the center of the outer profile wall (64) and the end of the respective seat (70,72) for the beads of the tire is effected by the outer profile wall (64) leading to an outer end of the respective seat (70,72) , and the first supporting wall (82,84) leading to the inner end of the respective seat (70,72), **characterized in that**
the first supporting walls (82,84) extending from the respective inner end of the associated seat (70,72) to the outer profile wall (64) of the rim (60) extend in an oblique direction such that the junction of the first supporting walls (82,84) with the outer profile wall (64) is closer to the centerline (C) of the rim (60) than the junction of the supporting walls (82,84) with the seats (70,72), and **in that**
the hollow chambers (74,75,76,77) below the seats (70,72) are divided by a further supporting wall (79,81) extending in general in parallel to the outer profile wall (64)

2. The motorcycle wheel rim (60) of claim 1, wherein the outer profile wall (64) has the general shape of a wide open "V", and wherein the connecting wall (78) is displaced from the plane of the seats (70,72) towards a center bottom portion of the outer profile wall (64).

3. The motorcycle wheel rim (60) of claim 1, wherein the hollow central chamber (80) between the outer profile wall (64) and the connecting wall (78) extends along the hollow chambers (74,75,76,77) below the seats (70,72) and up to a location below the seats (70,72).

4. The motorcycle wheel rim (60) of claim 1, wherein the further supporting wall (79,81) extends from about the midpoint of the first supporting wall (82,84) to about the midpoint of the seat (70,72).

5. The motorcycle wheel rim (60) of claim 1, wherein the connecting wall (78)and the outer profile wall (64) have centered holes for fitting a spoke nipple in the outer profile wall (64) and a sealing element in the hole of the connection wall to provide a rim for tubeless tires.

## Patentansprüche

1. Motorradfelge (60), umfassend:
- ein Profilelement, das eine kreisförmige Felge bildet, bezogen auf eine Ebene der Mittellinie (C) des Rads symmetrisch ist, eine äußere Profilwand (64) aufweist, die die allgemeine Form eines Bogens aufweist und in zwei Felgenhörnern (66, 68) endet, und innerhalb der Felgenhörner (66, 68) ein Paar von Aufnahmen (70, 72) für Wülste eines Reifens, der an der Felge (60) befestigt werden soll, umfasst, wobei
- mindestens zwei hohle ringförmige Kammern (74, 75, 76, 77) neben und unter den Aufnahmen (70, 72) vorgesehen und miteinander über eine ringförmige Verbindungswand (78), die eine ringförmige hohle mittige Kammer (80) mit der äußeren Profilwand (64) bildet, verbunden sind,
- die Aufnahmen (70, 72) an ihren äußeren Enden von der äußeren Profilwand (64) und an ihren inneren Ende von einer ersten Stützwand (82, 84), die vom jeweiligen inneren Ende der zugehörigen Aufnahme (70, 72) zur äußeren Profilwand (64) der Felge verläuft, gestützt werden,
- wodurch die Kraftübertragung von Speichen des Rads, die in der Mitte der äußeren Profilwand (64) sitzen, und dem Ende der jeweiligen Aufnahme (70, 72) für die Wülste des Reifens von der äußeren Profilwand (64) bewirkt wird, die zu einem äußeren Ende der jeweiligen Aufnahme (70, 72) führt, und der ersten Stützwand (82, 84), die zum inneren Ende der jeweiligen Aufnahme (70, 72) führt,
**dadurch gekennzeichnet, dass**
- die ersten Stützwände (82, 84), die vom jeweiligen inneren Ende der zugehörigen Aufnahme (70, 72) zur äußeren Profilwand (64) der Felge (60) derart in einer schrägen Richtung verlaufen, dass die Verbindung der ersten Stützwände (82, 84) mit der äußeren Profilwand (64) näher an der Mittellinie (C) der Felge (60) liegt als die Verbindung der Stützwände (82, 84) mit den Aufnahmen (70, 72), und **dadurch**, dass
- die hohlen Kammern (74, 75, 76, 77) unter den Aufnahmen (70, 72) durch eine weitere Stützwand (79, 81) getrennt sind, die im Allgemeinen parallel zur äußeren Profilwand (64) verläuft.

2. Motorradfelge (60) nach Anspruch 1, wobei die äußere Profilwand (64) die allgemeine Form eines weit offenen "V" aufweist und wobei die Verbindungswand (78) zur Ebene der Aufnahmen (70, 72) in Richtung eines mittleren unteren Abschnitts der äußeren Profilwand (64) versetzt ist.

3. Motorradfelge (60) nach Anspruch 1, wobei die hohle mittige Kammer (80) zwischen der äußeren Profilwand (64) und der Verbindungswand (78) entlang der hohlen Kammern (74, 75, 76, 77) unter den Aufnahmen (70, 72) und bis zu einer Stelle unter den Aufnahmen (70, 72) verläuft.

4. Motorradfelge (60) nach Anspruch 1, wobei die weitere Stützwand (79, 81) von ungefähr dem Mittelpunkt der ersten Stützwand (82, 84) aus bis ungefähr zum Mittelpunkt der Aufnahme (70, 72) verläuft.

5. Motorradfelge (60) nach Anspruch 1, wobei die Verbindungswand (78) und die äußere Profilwand (64) mittige Löcher zum Einsetzen eines Speichennippels in die äußere Profilwand (64) und eines Dichtelements in das Loch der Verbindungswand aufweisen, um eine Felge für schlauchlose Reifen bereitzustellen.

## Revendications

1. Jante de roue de motocyclette (60) comprenant :
- un élément profilé qui forme une jante circulaire, est symétrique par rapport à un plan médian (C) de la roue, a une paroi profilée externe (64) ayant la forme générale d'une arche et se terminant en deux rebords de jante (66, 68) et comprend, à l'intérieur des rebords de jante (66, 68), une paire de sièges (70, 72) pour les talons d'un pneu devant être monté sur la jante (60), dans lequel
- au moins deux chambres annulaires creuses (74, 75, 76, 77) sont disposées à côté de et au-dessous des sièges (70, 72) et sont reliées entre elles par une paroi de liaison annulaire (78) qui forme une chambre centrale creuse annulaire (80) avec la paroi profilée externe (64),
- les sièges (70, 72) sont supportés, à leurs extrémités externes, par la paroi profilée externe (64) et, à leurs extrémités internes, par une première paroi de support (82, 84) s'étendant de l'extrémité interne respective du siège associé (70, 72) à la paroi profilée externe (64) de la jante
- ce par quoi la transmission de charge à partir des rayons de la roue logés dans le centre de la paroi profilée externe (64) et de l'extrémité du siège respectif (70, 72) pour les talons du pneu est effectuée par la paroi profilée externe (64) conduisant à une extrémité externe du siège respectif (70, 72), et la première paroi de support (82, 84) conduisant à l'extrémité interne du siège respectif (70, 72),
**caractérisée par le fait que** :
- les premières parois de support (82, 84) s'étendant de l'extrémité interne respective du siège associé (70, 72) à la paroi profilée externe (64) de la jante (60) s'étendent dans une direction oblique de telle sorte que la jonction des premières parois de support (82, 84) avec la paroi profilée externe (64) est plus proche de la ligne médiane (C) de la jante (60) que la jonction des parois de support (82, 84) avec les sièges (70, 72), et **par le fait que** :
- les chambres creuses (74, 75, 76, 77) au-dessous des sièges (70, 72) sont divisées par une paroi de support supplémentaire (79, 81) s'étendant en générale parallèlement à la paroi profilée externe (64).

2. Jante de roue de motocyclette (60) selon la revendication 1, dans laquelle la paroi profilée externe (64) a la forme générale d'un « V » grand ouvert, et dans laquelle la paroi de liaison (78) est déplacée à partir du plan des sièges (70, 72) vers une partie inférieure centrale de la paroi profilée externe (64).

3. Jante de roue de motocyclette (60) selon la revendication 1, dans laquelle la chambre centrale creuse (80) entre la paroi profilée externe (64) et la paroi de liaison (78) s'étend le long des chambres creuses (74, 75, 76, 77) au-dessous des sièges (70, 72) et jusqu'à un emplacement au-dessous des sièges (70, 72).

4. Jante de roue de motocyclette (60) selon la revendication 1, dans laquelle la paroi de support supplémentaire (79, 81) s'étend à partir environ du point milieu de la première paroi de support (82, 84) jusqu'à environ le point milieu du siège (70, 72).

5. Jante de roue de motocyclette (60) selon la revendication 1, dans laquelle la paroi de liaison (78) et la paroi profilée externe (64) ont des trous centrés pour ajuster un écrou de rayon dans la paroi profilée externe (64) et un élément d'étanchéité dans le trou de la paroi de liaison pour fournir une jante pour des pneus sans chambre à air.
